# EUROPÄISCHE PATENTANMELDUNG

(11) **EP 3 425 246 A1**
(43) Veröffentlichungstag der Anmeldung: **09.01.2019**
(21) Anmeldenummer: 17465528.2
(22) Anmeldetag: 07.07.2017
(51) Int. Cl.: F16K 11/065, F16K 11/16, F02M 26/70, F02M 26/71

(54) **VENTIL**

(71) Anmelder: Continental Automotive GmbH, 30165 Hannover (DE)
(72) Erfinder: Petca, Eduard Cornel, 300218 Timisoara (RO)

(57) **Zusammenfassung**

Die Erfindung betrifft ein Ventil (1) zur Aufteilung eines Gasstroms, vorzugsweise ein Ventil (1) zur Aufteilung eines Abgasstroms für ein Abgasrückführungssystem, mit einem Gaseintritt (6), mit einem Gehäuse (2), mit einem ersten Gasaustritt (4, 5), mit einem zweiten Gasaustritt (4, 5) und mit einem Ventilkörper (8) zum Verschließen und zum Freigeben der Gasaustritte (4, 5), wobei der Ventilkörper (8) durch einen Aktuator (7) im Gehäuse (2) des Ventils (1) bewegbar ist, wobei der Ventilkörper (8) eine Führungsstange (9) aufweist, die zumindest ein erstes Verschlusselement (12, 13) und zumindest ein zweites Verschlusselement (12, 13) aufweist, die jeweils radial von der Führungsstange (9) abragen und durch die der erste Gasaustritt (4, 5) und/oder der zweite Gasaustritt (4, 5) verschließbar ist.

## Beschreibung

### Technisches Gebiet

Die Erfindung betrifft ein Ventil zur Aufteilung eines Gasstroms, vorzugsweise ein Ventil zur Aufteilung eines Abgasstroms für ein Abgasrückführungssystem, mit einem Gaseintritt, mit einem Gehäuse, mit einem ersten Gasaustritt, mit einem zweiten Gasaustritt und mit einem Ventilkörper zum Verschließen und zum Freigeben der Gasaustritte, wobei der Ventilkörper durch einen Aktuator im Gehäuse des Ventils bewegbar ist.

### Stand der Technik

Zur Aufteilung von Gasströmen, beispielsweise für Abgasrückführungssysteme, werden Ventile eingesetzt, die es erlauben einen Gasstrom auf zwei oder mehrere Strömungswege aufzuteilen.

Im Stand der Technik ist eine Vielzahl solcher Ventile bekannt, die diese Aufgabe auf unterschiedliche Weise lösen. Nachteilig an den bekannten Lösungen im Stand der Technik ist insbesondere, dass die Ventile komplexe Stellglieder aufweisen und insbesondere die gleichzeitige Aufteilung in zwei unterschiedliche Gasströme nicht oder in nicht ausreichendem Maße möglich ist.

### Darstellung der Erfindung, Aufgabe, Lösung, Vorteile

Daher ist es die Aufgabe der vorliegenden Erfindung ein Ventil zu schaffen, welches einen besonders einfachen Aufbau aufweist und vorteilhaft einen Gasstrom auf einzelne oder mehrere Strömungswege aufteilen kann.

Die Aufgabe hinsichtlich des Ventils wird durch ein Ventil mit den Merkmalen von Anspruch 1 gelöst.

Ein Ausführungsbeispiel der Erfindung betrifft ein Ventil zur Aufteilung eines Gasstroms, vorzugsweise ein Ventil zur Aufteilung eines Abgasstroms für ein Abgasrückführungssystem, mit einem Gaseintritt, mit einem Gehäuse, mit einem ersten Gasaustritt, mit einem zweiten Gasaustritt und mit einem Ventilkörper zum Verschließen und zum Freigeben der Gasaustritte, wobei der Ventilkörper durch einen Aktuator im Gehäuse des Ventils bewegbar ist, wobei der Ventilkörper eine Führungsstange aufweist, die zumindest ein erstes Verschlusselement und zumindest ein zweites Verschlusselement aufweist, die jeweils radial von der Führungsstange abragen und durch die der erste Gasaustritt und/oder der zweite Gasaustritt verschließbar ist.

Das Ventil ist besonders vorteilhaft, da es zumindest zwei Gasaustritte öffnen beziehungsweise schließen kann, wobei nur ein Ventilkörper verwendet wird. Das Ventil weist daher einen besonders einfach Aufbau auf, der nur eine sehr geringe Anzahl an beweglichen Teilen aufweist.

Das Ventil kann besonders bevorzugt zur Aufteilung eines Abgasstroms in einen Zweig zu einem Abgaskühler und einen Bypasszweig um den Abgaskühler herum verwendet werden.

Besonders vorteilhaft ist es, wenn der Ventilkörper translatorisch entlang der axialen Erstreckung des Gehäuses beweglich gelagert ist. Dies ist besonders einfach, da der Ventilkörper somit innen am rohrförmig ausgebildeten Gehäuse entlang bewegt werden kann und durch einen einfachen linearen Aktuator bewegt werden kann. Somit kann der Ventilkörper in praktisch jeder Position innerhalb des Ventils positioniert werden.

Auch ist es vorteilhaft, wenn das Gehäuse rohrförmig ausgebildet ist, wobei ein axialer Endbereich des Gehäuses den Gaseintritt bildet und am gegenüberliegenden axialen Endbereich ein Aktuator angeordnet ist, wobei die beiden Gasaustritte durch radial vom dem rohrförmigen Gehäuse abragende Fortsätze gebildet sind.

Die Gasaustritte sind an der radialen Mantelfläche des rohrförmigen Gehäuses angeordnet. In einer vorteilhaften Ausgestaltung ragen sie in einem rechten Winkel als ebenfalls rohrförmige Fortsätze ab. Der Neigungswinkel der Fortsätze zur axialen Hauptströmungsrichtung kann dem Anwendungszweck entsprechend angepasst werden.

Ein bevorzugtes Ausführungsbeispiel ist dadurch gekennzeichnet, dass die Verschlusselemente jeweils mittels eines Federelementes gegenüber der Führungsstange vorgespannt sind, wodurch die Verschlusselemente an die Innenwandung des rohrförmigen Gehäuses gepresst werden.

Die Verschlusselemente sind bevorzugt tellerartig ausgebildet und weisen eine mit dem Gasaustritt korrespondierende Dichtfläche auf. Dies dient dazu, dass die Verschlusselemente möglichst passgenau und dicht in die Gasaustritte eingreifen können, um ein sicheres Verschließen zu ermöglichen.

Ein Federelement ist vorteilhaft, um zwischen der Führungsstange und dem Verschlusselement eine Vorspannung zu erzeugen. Die Vorspannung unterstützt das Aufpressen der Verschlusselemente auf den jeweiligen Gasaustritten.

Auch ist es zu bevorzugen, wenn die abragenden Fortsätze am Übergang aus dem rohrförmigen Gehäuse einen Ventilsitz aufweisen, die jeweils von einem der Verschlusselemente verschließbar ist. Um einen dichten Verschluss der Gasaustritte zu gewährleisten, ist vorzugsweise an jedem der Gasaustritte ein Ventilsitz ausgebildet, der eine mit der Dichtfläche des jeweiligen Verschlusselementes korrespondierende Dichtfläche aufweist. Der Ventilsitz kann beispielsweise als umlaufende Fase ausgebildet sein, die am Übergang zwischen der axialen Strömungsstrecke des Ventils und den radial abragenden Fortsätzen ausgebildet ist.

Darüber hinaus ist es vorteilhaft, wenn in einer ersten Stellung des Ventilkörpers der erste Gasaustritt geöffnet ist und der zweite Gasaustritt von dem zweiten Verschlusselement verschlossen ist.

Dies wird vorteilhaft dadurch erreicht, dass die Verschlusselemente in axialer Richtung des Gehäuses versetzt zueinander angeordnet sind. Je nach Anordnung der Fortsätze der Gasaustritte können die Verschlusselemente auch in Umfangsrichtung zueinander versetzt angeordnet sein. Vorteilhafterweise wird der Ventilkörper innerhalb des Gehäuses nur entlang einer axialen Richtung translatorisch bewegt. Eine Rotation ist hierbei nicht zwingend vorgesehen. Das Rotieren des Ventilkörpers kann jedoch für weitere vorteilhafte Ausführungen ebenfalls vorgesehen werden.

Das Öffnen des ersten Gasaustritts und das Verschließen des zweiten Gasaustritts führt dazu, dass die gesamte durch den Gaseintritt einströmende Gasmenge vollständig in den ersten Gasaustritt überströmt.

Weiterhin ist es vorteilhaft, wenn in einer zweiten Stellung des Ventilkörpers der erste Gasaustritt von dem ersten Verschlusselement verschlossen ist und der zweite Gasaustritt geöffnet ist. Dies ist vorteilhaft, um im Vergleich zur ersten Stellung den gesamten einströmenden Gasanteil in den jeweils geöffneten zweiten Gasaustritt strömen zu lassen.

Auch ist es zweckmäßig, wenn in einer dritten Stellung der erste Gasaustritt teilweise von dem ersten Verschlusselement verschlossen ist und der zweite Gasaustritt teilweise von dem zweiten Verschlusselement verschlossen ist. Durch das Verschieben des Ventilkörpers in eine Art Zwischenstellung kann erreicht werden, dass beide Gasaustritte jeweils zumindest teilweise verschlossen werden. Durch die nicht verschlossenen Querschnitte der Gasaustritte kann weiterhin eine Gasmenge strömen. Ein solcher Regelzustand kann abhängig von der jeweiligen Betriebsart Vorteile hinsichtlich der Abgasnutzung aufweisen.

Darüber hinaus ist es vorteilhaft, wenn die Verschlusselemente jeweils auf einem radial von der Führungsstange abragenden Arm in radialer Richtung des Gehäuses beweglich gelagert sind. Durch eine Lagerung, die eine Beweglichkeit in radialer Richtung des Gehäuses erlaubt, kann das Verschlusselement einfach durch das Federelement in einer Vorspannung in Richtung zum jeweiligen Gasaustritt gebracht werden.

Weiterhin ist es zweckmäßig, wenn das Gehäuse an den Innenwandungen Führungselemente aufweist, die zur Führung der Verschlusselemente bei der translatorischen Bewegung in axialer Richtung des Gehäuses dienen. Führungselemente können beispielsweise Riefen, Nuten oder Vorsprünge sein, die eine Führung für die Verschlusselemente bilden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Schnittansicht durch ein erfindungsgemäßes Ventil in einer ersten Stellung,
- Fig. 2: eine Schnittansicht durch das Ventil von Figur 1 in einer zweiten Stellung, und
- Fig. 3: eine Schnittansicht durch das Ventil der Figuren 1 und 2 in einer dritten Stellung.

### Bevorzugte Ausführung der Erfindung

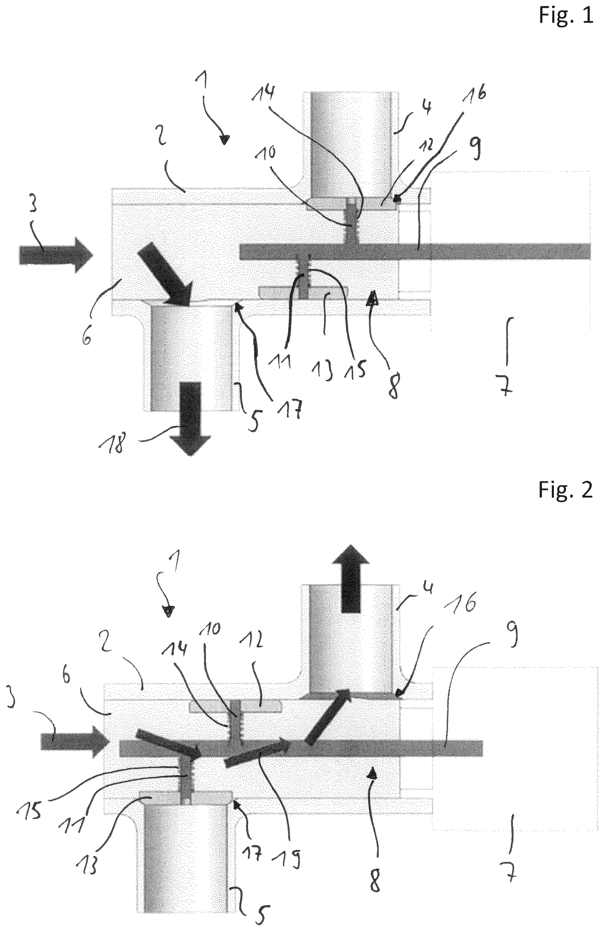

Die Figur 1 zeigt eine Schnittansicht durch ein Ventil 1. Das Ventil 1 weist ein im Wesentlichen rohrförmiges Gehäuse 2 auf, welches entlang einer axialen Richtung 3 durchströmbar ist. Von dem Gehäuse 2 ragen zwei rohrförmige Fortsätze in radialer Richtung ab. Die Fortsätze bilden die Gasaustritte 4, 5. Entlang der axialen Richtung 3 kann ein Gasstrom in das Gehäuse 2 einströmen. Die linke axiale Stirnseite bildet somit den Gaseintritt 6.

Am dem Gaseintritt 6 gegenüberliegenden axialen Endbereich ist ein Aktuator 7 angeordnet. Der Aktuator 7 wirkt auf einen Ventilkörper 8 ein, der im Wesentlichen aus einer in axialer Richtung verlaufenden Führungsstange 9 gebildet ist, von der zwei Arme 10, 11 in radialer Richtung abragen. An den Armen 10, 11 ist jeweils ein Verschlusselement 12, 13 angeordnet. Die Verschlusselemente 12, 13 sind gegenüber der Führungsstange 9 mittels Federelementen 14, 15 abgestützt, so dass eine definierte Vorspannung auf die Verschlusselemente 12, 13 wirkt.

Die Arme 10, 11 sind derart dimensioniert, dass die Verschlusselemente 12, 13 in Anlage mit der Innenwandung des Gehäuses 2 sind und weiterhin in die an den Gasaustritten 4, 5 ausgebildeten Ventilsitze 16, 17 eingreifen und diese verschließen können.

Durch den Aktuator 7 kann der Ventilkörper 8 translatorisch entlang der axialen Erstreckung des Gehäuses 2 bewegt werden. Die Verschlusselemente 12, 13 sind dabei je nach Position in Anlage mit der Innenwandung des Gehäuses 2 oder mit den Ventilsitzen 16, 17.

Die Verschlusselemente 12, 13 sind tellerartig ausgebildet und in radialer Richtung des Gehäuses 2 beweglich gelagert. Zum Verschieben des Ventilkörpers 8 in axialer Richtung muss das Verschlusselement 12 aus dem Ventilsitz 16 bewegt werden. Durch das Aufbringen einer axialen Kraft gleitet das Verschlusselement 12 am Ventilsitz 16 entlang und wird dadurch in radialer Richtung hin zur Führungsstange 9 gedrückt und gleitet bei einer weitere axialen Bewegung auf der Innenwandung des Gehäuses 2.

In Figur 1 wird ein Zustand des Ventils 1 gezeigt, bei dem der erste Gasaustritt 4 geschlossen ist und der zweite Gasaustritt 5 geöffnet ist. Ein Gasstrom kann somit vom Gaseintritt 6 zum zweiten Gasaustritt 5 strömen. Die Gasströmung ist mit dem Bezugszeichen 18 gekennzeichnet.

Die Figur 2 zeigt eine Schnittansicht durch das Ventil 1 der Figur 1. Identische Elemente sind mit identischen Bezugszeichen versehen.

Im Unterschied zur Figur 1 ist in Figur 2 nun ein Zustand des Ventils 1 gezeigt, bei dem der zweite Gasaustritt 5 verschlossen ist und der erste Gasaustritt 4 freigegeben ist. Eine Gasströmung kann somit vom Gaseintritt 6 hin zum ersten Gasaustritt 4 erfolgen. Die Gasströmung ist mit dem Bezugszeichen 19 gekennzeichnet.

Das zweite Verschlusselement 13 ist durch die axiale Bewegung der Führungsstange 9 hin zum Gaseintritt 6 bewegt worden, bis das Verschlusselement 13 über dem Ventilsitz 17 des Gasaustritts 5 positioniert war und von der Federkraft des Federelementes 15 in den Ventilsitz 17 gedrückt wurde.

Das Verschlusselement 12 gleitet an dem oberen Bereich der Innenwandung des Gehäuses 2.

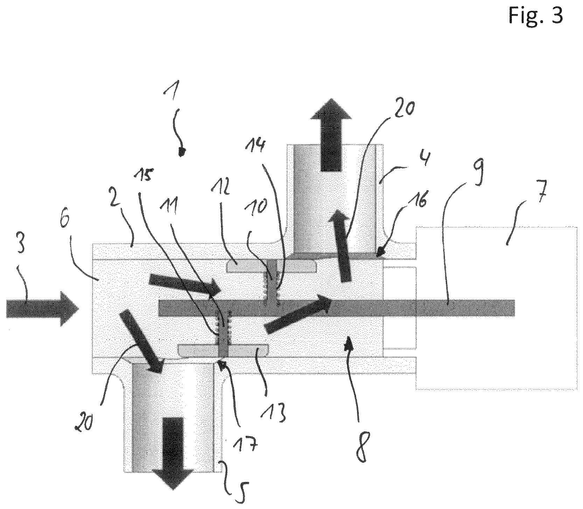

Die Figur 3 zeigt das Ventil 1 der Figuren 1 und 2 in einem dritten Zustand. Identische Elemente sind auch hier mit den identischen Bezugszeichen versehen.

Im Unterschied zu den vorausgegangenen Figuren ist der Ventilkörper 8 nun in einer Position in der beide Gasaustritte 4, 5 jeweils teilweise von den jeweiligen Verschlusselementen 12, 13 überdeckt sind. Eine Gasströmung ist somit entlang den mit dem Bezugszeichen 20 gekennzeichneten Pfeilen vom Gaseintritt 6 hin zu den Gasaustritten 4, 5 möglich. Der Zustand der Figur 3 ist eine Zwischenposition in der das Ventil 1 keinen der Gasaustritte 4, 5 vollständig verschließt, sondern lediglich die Öffnungsquerschnitte der Gasaustritte 4, 5 verringert, wodurch die Gasströmung gegebenenfalls gedrosselt wird.

Das in den Figuren 1 bis 3 gezeigte Ausführungsbeispiel weist insbesondere keinen beschränkenden Charakter auf und dient der Verdeutlichung des Erfindungsgedankens. Die Ausführungsform ist insbesondere hinsichtlich der Materialwahl, der geometrischen Abmessungen und der Gestaltung der einzelnen Elemente als beispielhaft zu verstehen und schließt alternative Lösungen nicht aus.

## Patentansprüche

1. Ventil (1) zur Aufteilung eines Gasstroms, vorzugsweise ein Ventil (1) zur Aufteilung eines Abgasstroms für ein Abgasrückführungssystem, mit einem Gaseintritt (6), mit einem Gehäuse (2), mit einem ersten Gasaustritt (4, 5), mit einem zweiten Gasaustritt (4, 5) und mit einem Ventilkörper (8) zum Verschließen und zum Freigeben der Gasaustritte (4, 5), wobei der Ventilkörper (8) durch einen Aktuator (7) im Gehäuse (2) des Ventils (1) bewegbar ist, **dadurch gekennzeichnet , dass** der Ventilkörper (8) eine Führungsstange (9) aufweist, die zumindest ein erstes Verschlusselement (12, 13) und zumindest ein zweites Verschlusselement (12, 13) aufweist, die jeweils radial von der Führungsstange (9) abragen und durch die der erste Gasaustritt (4, 5) und/oder der zweite Gasaustritt (4, 5) verschließbar ist.

2. Ventil (1) nach Anspruch 1, **dadurch gekennzeichnet, dass** der Ventilkörper (8) translatorisch entlang der axialen Erstreckung des Gehäuses (2) beweglich gelagert ist.

3. Ventil (1) nach einem der vorhergehenden Ansprüche, **dadurch gekennzeichnet, dass** das Gehäuse (2) rohrförmig ausgebildet ist, wobei ein axialer Endbereich des Gehäuses (2) den Gaseintritt (6) bildet und am gegenüberliegenden axialen Endbereich ein Aktuator (7) angeordnet ist, wobei die beiden Gasaustritte (4, 5) durch radial vom dem rohrförmigen Gehäuse (2) abragende Fortsätze gebildet sind.

4. Ventil (1) nach einem der vorhergehenden Ansprüche, **dadurch gekennzeichnet, dass** die Verschlusselemente (12, 13) jeweils mittels eines Federelementes (14, 15) gegenüber der Führungsstange (9) vorgespannt sind, wodurch die Verschlusselemente (12,13) an die Innenwandung des rohrförmigen Gehäuses (2) gepresst werden.

5. Ventil (1) nach einem der vorhergehenden Ansprüche, **dadurch gekennzeichnet, dass** die abragenden Fortsätze am Übergang aus dem rohrförmigen Gehäuse (2) einen Ventilsitz (16, 17) aufweisen, die jeweils von einem der Verschlusselemente (12, 13) verschließbar sind.

6. Ventil (1) nach einem der vorhergehenden Ansprüche, **dadurch gekennzeichnet, dass** in einer ersten Stellung des Ventilkörpers (8) der erste Gasaustritt (4) geöffnet ist und der zweite Gasaustritt (5) von dem zweiten Verschlusselement (13) verschlossen ist.

7. Ventil (1) nach einem der vorhergehenden Ansprüche, **dadurch gekennzeichnet, dass** in einer zweiten Stellung des Ventilkörpers (8) der erste Gasaustritt (4) von dem ersten Verschlusselement (12) verschlossen ist und der zweite Gasaustritt (5) geöffnet ist.

8. Ventil (1) nach einem der vorhergehenden Ansprüche, **dadurch gekennzeichnet, dass** in einer dritten Stellung der erste Gasaustritt (4) teilweise von dem ersten Verschlusselement (12) verschlossen ist und der zweite Gasaustritt (5) teilweise von dem zweiten Verschlusselement (13) verschlossen ist.

9. Ventil (1) nach einem der vorhergehenden Ansprüche, **dadurch gekennzeichnet, dass** die Verschlusselemente (12, 13) jeweils auf einem radial von der Führungsstange (9) abragenden Arm (10, 11) in radialer Richtung des Gehäuses (2) beweglich gelagert sind.

10. Ventil (1) nach einem der vorhergehenden Ansprüche, **dadurch gekennzeichnet, dass** das Gehäuse (2) an den Innenwandungen Führungselemente aufweist, die zur Führung der Verschlusselemente (12, 13) bei der translatorischen Bewegung in axialer Richtung (3) des Gehäuses (2) dienen.
